# EUROPEAN PATENT APPLICATION

(11) **EP 1 583 079 A2**
(43) Date of publication of application: **05.10.2005**
(21) Application number: 04030911.4
(22) Date of filing: 28.12.2004
(51) Int. Cl.: G11B 5/48

(54) **Magnetic head device and magneto-optical disc apparatus**

(30) Priority: 30.03.2004 JP 2004098923
(71) Applicant: MATSUSHITA ELECTRIC INDUSTRIAL CO., LTD., Kadoma-shi, Osaka 571-8501 (JP)
(72) Inventor: Murakami, Yutaka, Hirakata-shi Osaka 573-0163 (JP); Tomita, Hironori, Ikoma-shi Nara 630-0141 (JP)
(74) Representative: Grünecker, Kinkeldey, Stockmair & Schwanhäusser Anwaltssozietät

(57) **Abstract**

A magnetic head device includes a head main body for applying a magnetic field to an information recording medium; a connecting member including a main part and an elastic part connected to the main part, the elastic part supporting the head main body such that the head main body is swingable; a first position restriction member provided at the head main body for restricting a position of the head main body by contacting the elastic part; and a second position restriction member for restricting a position of the head main body by restricting a position of the first position restriction member which in contact with the elastic part.

## Description

### BACKGROUND OF THE INVENTION

The present invention relates to a magnetic head device for applying a magnetic field to an information recording medium. and a magneto-optical disc apparatus including the same.

Magneto-optical discs represented by mini discs (hereinafter, referred to as "MDs") are known as one type of Information recording mediums. A magneto-optical disc includes a plurality of layers having a magneto-optical recording layer. The magneto-optical disc is accommodated in a cartridge. The cartridge has an opening for exposing both of two surfaces of a part of the magneto-optical disc and a shutter movable so as to open or close the opening.

A magneto-optical disc apparatus records information on a magneto-optical disc mounted thereon and/or reproduces information recorded on a magneto-optical disc mounted thereon. The magneto-optical disc apparatus includes a disc rotation driving mechanism for rotating a magneto-optical disc, an optical head device provided on the side of one surface of the magneto-optical disc for irradiating a magneto-optical recording layer of the magneto-optical disc with a converged optical beam, and a magnetic head device provided on the side of the other surface of the magneto-optical disc for applying a magnetic field to the magneto-optical recording layer of the magneto-optical disc. The magnetic head device is located so as to face the optical head device with the mounted magneto-optical disc interposed therebetween.

When the magneto-optical disc is mounted on the magneto-optical disc apparatus, the shutter of the cartridge moves to open the opening of the cartridge, and thus both of the two surfaces of a part of the magneto-optical disc is exposed through the opening. When the magneto-optical disc apparatus is driven, the disc rotation driving mechanism rotates the magneto-optical disc. One exposed surface of the magneto-optical disc is irradiated with an optical beam, which is obtained by converging light by an optical system of the optical head device. At this point, a magnetic field is applied to the other exposed surface of the magneto-optical disc by the magnetic head device. The direction of the magnetic field applied by the magnetic head device is modulated in accordance with the information to be recorded. When a part of the magneto-optical recording layer of the magneto-optical disc, which is irradiated with the light beam, is heated to the Curie temperature or a higher temperature by the irradiation with the optical beam, the heated part of the magneto-optical recording layer loses a coercive force thereof and is magnetized in a direction in accordance with the direction of the magnetic field applied by the magnetic head device. Since the magneto-optical disc is being rotated by the disc rotation driving mechanism, the heated part of the magneto-optical recording layer moves relative to the optical beam and goes into the state where the part is not irradiated with the optical beam anymore. When this occurs, the temperature of that part of the magneto-optical recording layer becomes lower than the Curie temperature, and thus the direction of magnetization is fixed.

Binary information can be recorded on the magneto-optical disc by fixing the direction of magnetization of a predetermined part of the magneto-optical recording layer in accordance with the information to be recorded in this manner. For reproducing information recorded on the magneto-optical disc, the magneto-optical disc is irradiated with an optical beam having such an intensity that does not influence the direction of magnetization of the magneto-optical recording layer of the magneto-optical disc, and light reflected by the magneto-optical disc is detected. The polarization direction of the light reflected by the magneto-optical disc varies in accordance with the direction of magnetization of the magneto-optical recording layer. Therefore, binary information recorded on the magneto-optical disc can be reproduced by detecting the polarization direction of the light reflected by the magneto-optical disc.

While the magneto-optical disc is rotating, the surface of the magneto-optical disc may sometimes vibrate. In order to compensate for this, the magnetic head device of the magneto-optical disc apparatus includes a supporting member swingable in the direction in which the surface of the magneto-optical disc may vibrate, and a head main body for applying a magnetic field to the magneto-optical disc is attached to a tip of the supporting member. The head main body includes a slidable body which is slidable in contact with, or floatable at a very fine distance from, the magneto-optical disc. The head main body also Includes a magnetic head element. In the following explanation, the slidable body is slidable in contact with the magneto-optical disc.

The position of the magnetic head device for recording information on the magneto-optical disc is different from the position of the magnetic head device for reproducing information recorded on the magneto-optical disc. For recording information on the magneto-optical disc, the magnetic head device is close to the magneto-optical disc in order to apply a magnetic field to the magneto-optical disc. By contrast, for reproducing information recorded on the magneto-optical disc, the magnetic head device is not close to the magneto-optical disc. The magnetic head device is not close to the magneto-optical disc except for when recording information on the magneto-optical disc. For example, after the magneto-optical disc is dismounted from the magneto-optical disc apparatus, the magnetic head device is not close to the magneto-optical disc. For recording information on the magneto-optical disc, the magnetic head device moves so as to close to the magneto-optical disc apparatus. In this specification, the position of a magnetic head device for recording information on a magneto-optical disc is referred to as a "first position" , and the position of the magnetic head device except for when recording Information on a magneto-optical disc is referred to as a "second position". When the magnetic head device is at the first position, the slidable body of the magnetic head device is close to the magneto-optical disc, and is slidable in contact with the magneto-optical disc. When the magnetic head device is at the second position, the supporting member and the head main body are lifted by a lifting mechanism and are separated from the magneto-optical disc.

Japanese Laid-Open Patent Publication No. 9-161427 discloses a conventional magnetic head device. With reference to FIGs. **24A** through **27**, a conventional magnetic head device 110 disclosed in Japanese Laid-Open Patent Publication No. 9-161427 will be described.

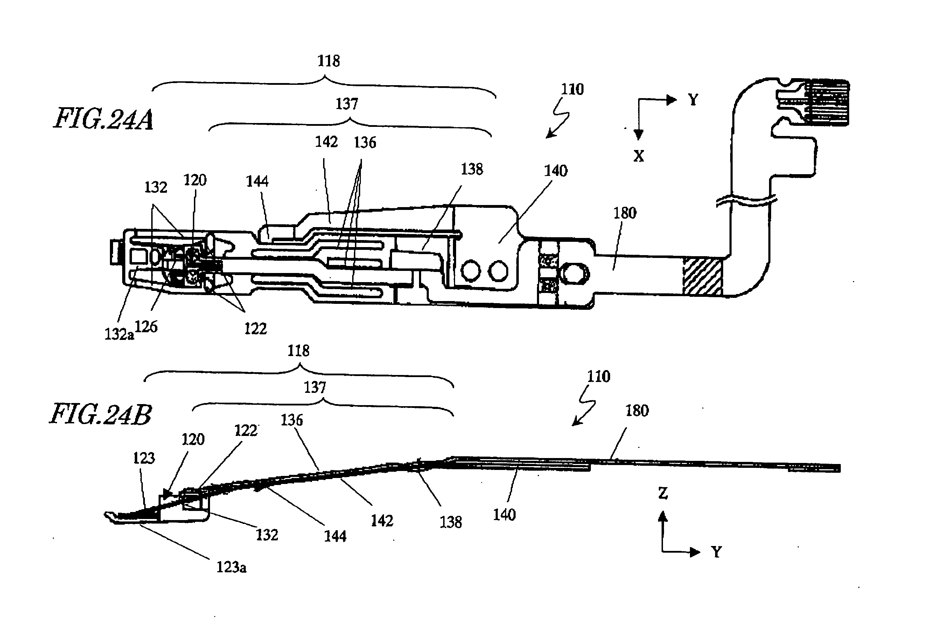

As shown in FIG. **24A**, a fixing plate **140** fixes a magnetic head **118**. The magnetic head 118 includes a head main body **120** and a supporting member **137** for supporting the head main body **120** and pressing the head main body **120** to a magneto-optical disc. The supporting member **137** is formed of a thin spring plate formed of, for example, stainless steel or phosphorus bronze. One end of the supporting member **137** is fixed to the fixing plate **140** by means of, for example, spot welding or bonding.

The supporting member **137** includes a first elastic part **138** provided in the vicinity of the fixing plate **140**, a rigid part **136** connected to the first elastic part **138**, and a second elastic part **132** connected to the rigid part **136**. The rigid part **136** has recessed portions and projecting portions formed by drawing. The rigid part **136** acts as a rigid body for the first elastic part **138** and the second elastic part **132**. The second elastic part **132** is branched into two portions, and the two branched portions are connected to each other at tips thereof. A gimbal **132a** is provided at the connected tip of the second elastic part **132**. The head main body **120** is attached to the gimbal **132a**. The second elastic part **132** has an opening. The head main body **120** is located in the opening of the second elastic part **132**, and is supported by the second elastic part **132** by means of, for example, bonding or fusion so as to be swingable.

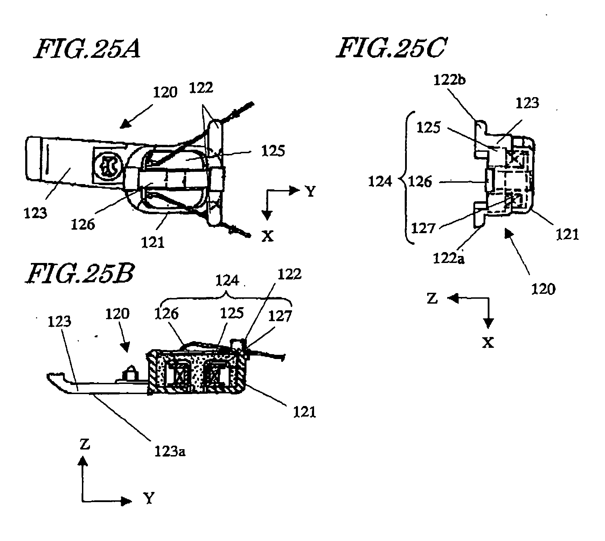

The head main body **120** includes a magnetic core **126**. The magnetic core **126** is attached to a coil **127** of a conductive line (not shown in FIGs. **24A** and **24B**; see FIGs. **25B** and **25C**). Ends of the conductive line are fixed to a flexible printed board (hereinafter, referred to as an "FPC ") **180** by soldering, and the coil **127** is electrically connected to the FPC **180** via the solder. When an electric current corresponding to a signal to be recorded flows from the FPC **180**, a magnetic field in correspondence with the electric current is applied to the magneto-optical disc **112** from the central magnetic pole of the magnetic core **126**. An upper position restriction member **122** is provided at the head main body **120**.

The fixing plate **140** is connected to an arm member **142** extending toward the head main body **120** (i.e., in the -Y direction). A tip of the arm member **142** is connected to a position restriction member **144** extending in the +X direction.

As shown in FIG. **24B**, the first elastic part **138** acts to allow the head main body **120** to follow the vibration of the surface of the magneto-optical disc, and the second elastic part **132** acts to allow the head main body **120** to follow the tilt of the magneto-optical disc. The head main body **120** Includes a slidable body **123**, which has a slidable portion **123a** which is slidable in contact with the magneto-optical disc. The upper position restriction member **122** restricts the position of the head main body **120** in the -Z direction.

Hereinafter, the head main body **120** will be described in detail.

As shown in FIGs. **25A**, **25B** and **25C**, the head main body **120** includes a mounting member **121**, the slidable body **123** attached to the mounting member **121**, and a magnetic head element **124** accommodated in the mounting member **121**. The magnetic head element **124** applies a magnetic field. The upper position restriction member **122** includes two upper position restriction portions (i.e., upper position restriction portions **122a** and **122b**). The upper position restriction portion **122a** extends from the mounting member **121** in +X direction, and the upper position restriction portion **122b** extends from the mounting member **121** in the -X direction. The upper position restriction member **122** is integrally molded with the mounting member **121** of a resin material. The slidable body **123** is integrally fixed to the mounting member **121** by, for example, an adhesive, or is integrally molded with the mounting member **121** of a resin material. The slidable body **123** is formed of a resin material having a high slidability, for example, polyphenylene sulfide or a liquid crystal polymer. The slidable body **123** has the slidable portion **123a** which is slidable in contact with the magneto-optical disc. The slidable portion **123a** is provided such that the slidable body **123** can stably contact the magneto-optical disc.

The magnetic head element **124** includes a bobbin **125**, the magnetic core **126**, and the coil **127**. As shown in FIG. **25B**, the magnetic core **126** has generally E-shaped, and is formed of a soft magnetic material such as, for example, sintered ferrite. The coil **127** is formed by winding a conductive line around the bobbin **125**. The magnetic core **126** is attached to the coil **127** such that the coil **127** surrounds the central magnetic pole of the magnetic core **126** having the generally E shape. Both of two ends of the conductive line wound around the bobbin **125** are fixed to the FPC **180** (see FIGs. **24A** and **24B**) by soldering. The coil **127** is electrically connected to the FPC **180** by the solder, and the electric current from the FPC **180** flows through the coil **127**.

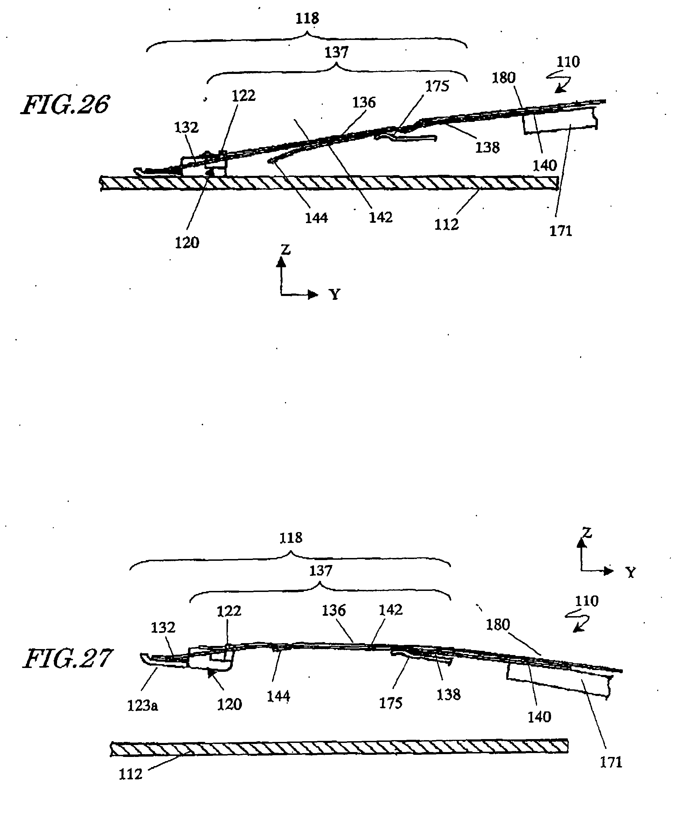

With reference to FIGs. **26** and **27**, operations of the magnetic head device for recording information on amagneto-optical disc and for reproducing information recorded on a magneto-optical disc will be described.

As shown in FIG. **26**, the fixing plate **140** is fixed to a magnetic head device attachment member **171**, which has a mechanism for allowing the fixing plate **140** to rotate within the Y-Z plane. For recording information on a magneto-optical disc **112**, the magnetic head device **110** moves from the second position to the first position. At this point, a lifting mechanism **175** pivots in a direction of separating from the supporting member **137** and approaching a magneto-optical disc **112**, and the magnetic head device attachment member **171** is tilted downward (in the -Z direction). Therefore, the head main body **120** moves to a position close to the magneto-optical disc 112. The supporting member **137** supplies the head main body **120** with a force in a direction of pressing the head main body **120** to the magneto-optical disc **112**. Thus, the head main body **120** can be slide in contact with the rotating magneto-optical disc **112**.

As shown in FIG. **27**, for reproducing information recorded on the magneto-optical disc **112**, the magnetic head device **110** moves from the first position to the second position. At this point, the lifting mechanism **175** pivots in a direction of separating from the magneto-optical disc **112**, and contacts the supporting member **137** and the arm member **142** to lift the supporting member **137** and the arm member **142**, and the magnetic head device attachment member **171** is tilted upward (in the +Z direction). Therefore, the head main body **120** is separated from the magneto-optical disc **112**. At this point, the position restriction member **144** is in contact with the rigid part **136**. In FIGs. **26** and **27**, the cartridge is omitted.

The magneto-optical disc apparatus is often carried around and thus sometimes receives a strong impact by falling or transportation. In such a case, the magnetic head device **110** of the magneto-optical disc apparatus receives an impact as strong as about 1000 m/s² to 5000 m/s². Although the magnetic head device **110** has two elastic parts (the first elastic part **138** and the second elastic part **132**) as described above, these elastic parts do not act as elastic parts once they are plastically deformed by the impact.

When the magnetic head device **110** receives an impact in the -Z direction, the rigid part **136** approaches and contacts the position restriction member **144**, and thus the position restriction member **144** restricts the position of the rigid part **136** in the -Z direction. In this manner, the position restriction member **144** prevents the first elastic part **138** from being plastically deformed.

When the magnetic head device **110** receives an impact in the -Z direction, the head main body **120** moves in the -Z direction, and the upper position restriction member **122** provided at the head main body **120** contacts the second elastic part **132.** The upper position restriction member **122,** which restricts the position of the head main body **120** in the -Z direction, prevents the second elastic part **132** from being plastically deformed.

The head main body **120** provided at the tip of the magnetic head device **110** is relatively heavy, and the second elastic part **132** for supporting the head main body **120** is most liable to be plastically deformed. In the magnetic head device **110** disclosed in Japanese Laid-Open Patent Publication No. 9-161427, the upper position restriction member **122** restricts the position of the head main body **120** and prevents the second elastic part **132** from being plastically deformed. However, when the magnetic head device **110** receives a very strong impact, the head main body **120** providing with the upper position restriction member **122** may undesirably move in the -Z direction while the upper position restriction member **122** is in contact with the second elastic part **132,** resulting in deformation of the second elastic part **132.**

The present invention has an object of providing a magnetic head device and a magneto-optical head apparatus having high reliability against an impact caused by falling, transportation or the like.

### SUMMARY OF THE INVENTION

According to one aspect of the present invention, a magnetic head device includes a head main body for applying a magnetic field to an information recording medium; a connecting member including a main part and an elastic part connected to the main part, the elastic part supporting the head main body such that the head main body is swingable; a first position restriction member provided at the head main body for restricting a position of the head main body by contacting the elastic part; and a second position restriction member for restricting a position of the head main body by restricting a position of the first position restriction member which in contact with the elastic part.

In one embodiment of the invention, the second position restriction member is located so as to face the first position restriction member with the elastic part interposed therebetween.

In one embodiment of the invention, the second position restriction member restricts the position of the first position restriction member by contacting at least one of the elastic part and the first position restriction member.

In one embodiment of the invention, the second position restriction member is provided at the main part.

In one embodiment of the Invention, the main part includes a rigid part connected to the elastic part and another elastic part connected to the rigid part.

In one embodiment of the invention, the elastic part, the rigid part and the another elastic part are formed of a supporting member.

In one embodiment of the invention, the main part further includes a fixing part for fixing the supporting member.

In one embodiment of the invention, the main part further includes an arm member, and the second position restriction member is attached to the arm member.

In one embodiment of the invention, the arm member is connected to the fixing part.

In one embodiment of the invention, the arm member is provided so as to be pivotable with respect to the fixing part.

In one embodiment of the invention, the second position restriction member has a slidable projection at an end thereof.

In one embodiment of the invention, the slidable projection has a curved surface.

In one embodiment of the invention, the second position restriction member is provided at the rigid part.

In one embodiment of the invention, the first position restriction member is located in the vicinity of the center of gravity of the head main body.

In one embodiment of the invention, the connecting member has a free end and a fixed end, the elastic part of the connecting member is located on the side of the free end, and the main part is located on the side of the fixed end. The first position restriction member is located at an area of the head main body which is other than an area of the head main body closest to the fixed end of the connecting member.

In one embodiment of the invention, the first position restriction member is provided at the head main body, such that a force in a direction opposite to a direction in which the center of gravity of the head main body moves is given to the center of gravity of the head main body by the first position restriction member contacting the elastic part.

In one embodiment of the invention, the connecting member extends in a first direction, and the first position restriction member is provided so as to be perpendicular to the first direction.

In one embodiment of the invention, the magnetic head device further includes a third position restriction member for restricting a position of the main part.

In one embodiment of the invention, the second position restriction member is attached to the third position restriction member.

In one embodiment of the Invention, the magnetic head device further includes a fourth position restriction member provided at the head main body for restricting a position of the head main body by contacting the main part.

In one embodiment of the invention, the magnetic head device is movable between a first position, at which the head main body is slidable in contact with the information recording medium or floatable at a fine distance from the information recording medium, and a second position, at which the head main body is separated from the information recording medium.

According to another aspect of the invention, a magnetic head device includes a head main body for applying a magnetic field to an information recording medium; a connecting member including a main part and an elastic part connected to the main part, the elastic part supporting the head main body such that the head main body is swingable; a first position restriction member provided at the head main body; and a second position restriction member for restricting a position of the head main body by restricting a position of the first position restriction member. The main part includes a high rigidity part having a higher rigidity than the rigidity of the elastic part. The second position restriction member is connected to the high rigidity part.

In one embodiment of the invention, the second position restriction member restricts a position of the first position restriction member by contacting the first position restriction member.

In one embodiment of the invention, the elastic part has an opening. The first position restriction member moves in the opening of the elastic part to contact the second position restriction member.

In one embodiment of the invention, the elastic part has an opening. The head main body is located in the opening of the elastic part. The first position restriction member is provided at the head main body so as to bridge over the elastic part. A part of the first position restriction member moves outside the elastic part to contact the second position restriction member.

In one embodiment of the invention, the main part includes a rigid part connected to the elastic part, another elastic part connected to the rigid part, and a fixing part connected to the another elastic part. The high rigidity part is the fixing part. The second position restriction member is connected to the fixing part.

In one embodiment of the invention, the main part includes a rigid part connected to the elastic part, and another elastic part connected to the rigid part. The high rigidity part is the rigid part. The second position restriction member is connected to the rigid part.

According to another aspect of the invention, a magneto-optical disc apparatus includes any of the above-described magnetic head device; and an optical head device.

According to the present invention, the reliability of the magnetic head device and the magneto-optical disc apparatus against the impact can be improved.

### BRIEF DESCRIPTION OF THE DRAWINGS

FIG. **1A** is an exploded perspective view of a magneto-optical disc apparatus according to a first embodiment of the present invention.

FIG. **1B** is a perspective view of a magnetic head device used in the magneto-optical disc apparatus according to the first embodiment.

FIG. **2** is a partial perspective view of the magnetic head device according to the first embodiment.

FIG. **3** is a plan view of a fixing plate, an arm member, a fourth position restriction member and a second position restriction member of the magnetic head device according to the first embodiment.

FIG. **4** is an exploded perspective view of a head main body and a first position restriction member of the magnetic head device according to the first embodiment.

FIG. **5** is a front view of the magnetic head device according to the first embodiment at a first position.

FIG. **6** is a front view of the magnetic head device according to the first embodiment at a second position.

FIG. **7** is a plan view of the magnetic head device according to the first embodiment.

FIG. **8** is a cross-sectional view of FIG. **7** taken along line **A-A'** in FIG. **7.**

FIG. **9** is a plan view of the magnetic head device according to the first embodiment.

FIG. **10** is a front view of the magnetic head device according to the first embodiment.

FIG. **11** is a cross-sectional view of FIG. **9** taken along line **A-A'** in FIG. **9.**

FIG. **12** is a partial perspective view of a magnetic head device according to a second embodiment of the present invention.

FIG. **13** is a front view of the magnetic head device according to the second embodiment at the second position.

FIG. **14** is a perspective view of a magnetic head device according to a third embodiment of the present invention.

FIG. **15** is a front view of the magnetic head device according to the third embodiment at the first position.

FIG. **16** is a rear view of a fixing plate, a pivotable arm member, a fourth position restriction member and the second position restriction member of the magnetic head device according to the third embodiment.

FIG. **17** is a partial perspective view of a magnetic head device according to a fourth embodiment of the present invention.

FIG. **18** is a partial rear view of the magnetic head device according to the fourth embodiment.

FIG. **19** is a front view of the magnetic head device according to the fourth embodiment at the first position.

FIG. **20** is a perspective view of a magnetic head device according to a fifth embodiment of the present invention.

FIG. **21** is a partial plan view of the magnetic head device according to the fifth embodiment.

FIG. **22** is a perspective view of a magnetic head device according to a modification of the fifth embodiment of the present invention.

FIG. **23** is a partial rear view of the magnetic head device according to the modification of the fifth embodiment.

FIG. **24A** is a plan view of a conventional magnetic head device.

FIG. **24B** is a front view of the conventional magnetic head device.

FIG. **25A** is a plan view of a head main body and an upper position restriction member of the conventional magnetic head device.

FIG. **25B** is a cross-sectional view of the head main body and the upper position restriction member of the conventional magnetic head device, taken along a plane parallel to the front surface thereof.

FIG. **25C** is a right side view of the head main body and the upper position restriction member of the conventional magnetic head device.

FIG. **26** is a front view of the conventional magnetic head device at the first position.

FIG. **27** is a front view of the conventional magnetic head device at the second position.

### DESCRIPTION OF THE PREFERRED EMBODIMENTS

Hereinafter, a magnetic head device and a magneto-optical disc apparatus according to the present invention will be described by way of embodiments with reference to the attached drawings.

In the following embodiments, the information recording medium is a magneto-optical disc; namely, a magnetic head device according to the present invention is used in a magneto-optical disc apparatus. The present invention is not limited to this. The information recording medium may be a magnetic disc used as a flexible disc or a hard disc, and a magnetic head apparatus according to the present invention may be used for a magnetic disc apparatus.

### (Embodiment 1)

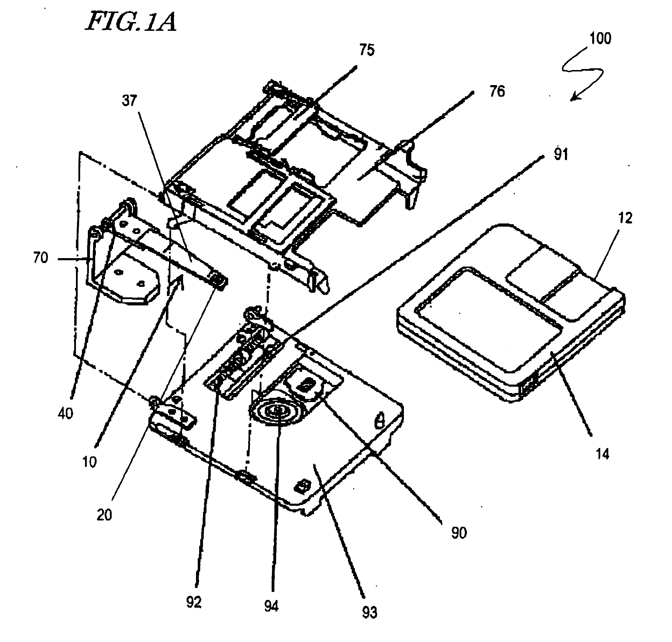

With reference to FIGs. **1A** through **11**, a magneto-optical disc apparatus **100** and a magnetic head device **10** according to a first embodiment of the present invention will be described. As shown in FIG. **1A**, the magneto-optical disc apparatus **100** includes the magnetic head device **10** and an optical head device **90**. A magneto-optical disc **12** is mountable on the magneto-optical disc apparatus **100**. The magneto-optical disc **12** includes a plurality of layers having a magneto-optical recording layer and is accommodated in a cartridge **14**. A tightening member **70** is provided for tightening the magnetic head device **10** and the optical head device **90**. A fixing plate **40** of the magnetic head device **10** is pivotably attached to the tightening member **70** via, for example, a shaft or a spring. A lifting mechanism **75** is provided between the magnetic head device **10** and the magneto-optical disc **12**, and one end of the lifting mechanism **75** is curved. When the lifting mechanism **75** pivots in a direction of approaching the magneto-optical disc **12**, the lifting mechanism **75** does not contact a supporting member **37** of the magnetic head device **10**. Thus, a head main body **20** and the supporting member **37** both of the magnetic head device **10** approach the magneto-optical disc **12**. When the lifting mechanism **75** pivots in a direction of separating from the magneto-optical disc **12**, the lifting mechanism **75** contacts the supporting member **37** of the magnetic head device **10**. Thus, the head main body **20** and the supporting member **37** are separated from the magneto-optical disc **12**. The optical head device **90** is movable in a radial direction of the magneto-optical disc **12** with respect to a base **93** by a shaft **91** and a screw shaft **92**. The magneto-optical disc **12**, which is accommodated in the cartridge **14**, is inserted into a holder mechanism **76** and mounted on a spindle motor 94 attached to the base **93**.

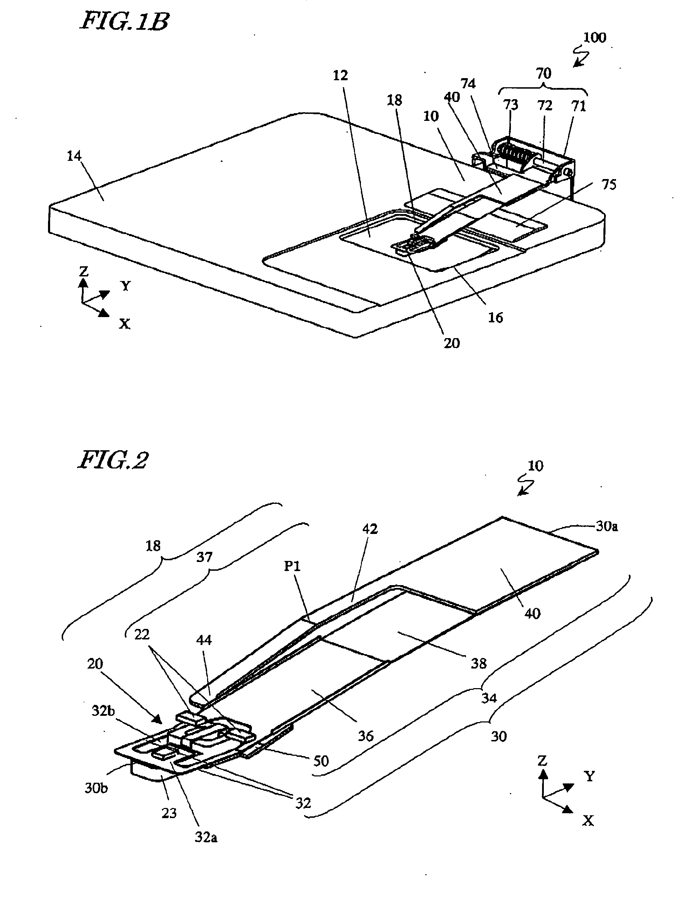

FIG. **1B** is a perspective view of the magneto-optical disc apparatus 100 having the magneto-optical disc **12** mounted thereon. As shown in FIG. **1B**, the cartridge **14** has an opening **16** for exposing both of two surfaces of a part of the magneto-optical disc **12** and a shutter (not shown) movable so as to open or close the opening **16**. A main surface of the two surfaces of the magneto-optlcal disc **12** will be referred to as a "recording/reproduction surface" .

The tightening member **70** includes an angle **71** formed by bending a sheet metal, a shaft **72**, a spring **73**, and a pivotable base **74**. The pivotable base **74** is pivotably attached to the shaft **72**. The fixing plate **40** of the magnetic head device **10** is fixed to the pivotable base **74** by means of, for example, bonding, welding, or screwing. Since the tightening member **70** is fixed to the optical head device **90** (see FIG. 1A), the fixing plate **40** is fixed to the optical head device **90** via the tightening member **70**. The pivotable base **74** is forced in the -Z direction by the spring **73**, and a positioning member obtained by extending the pivotable base **74** in the -X direction contacts a receiving member obtained by extending the angle **71** in the -Y direction. Thus, the position of the fixing plate 4**0** in the Z directions, i.e., the level of the fixing plate **40**, is determined. The lifting mechanism **75** acts as a magnetic head elevation device for moving up and down a magnetic head **18** of the magnetic head device **10**. For recording information on the magneto-optical disc **12**, the head main body **20** of the magnetic head device **10** goes into the opening 16 of the cartridge **14** which is in the open state.

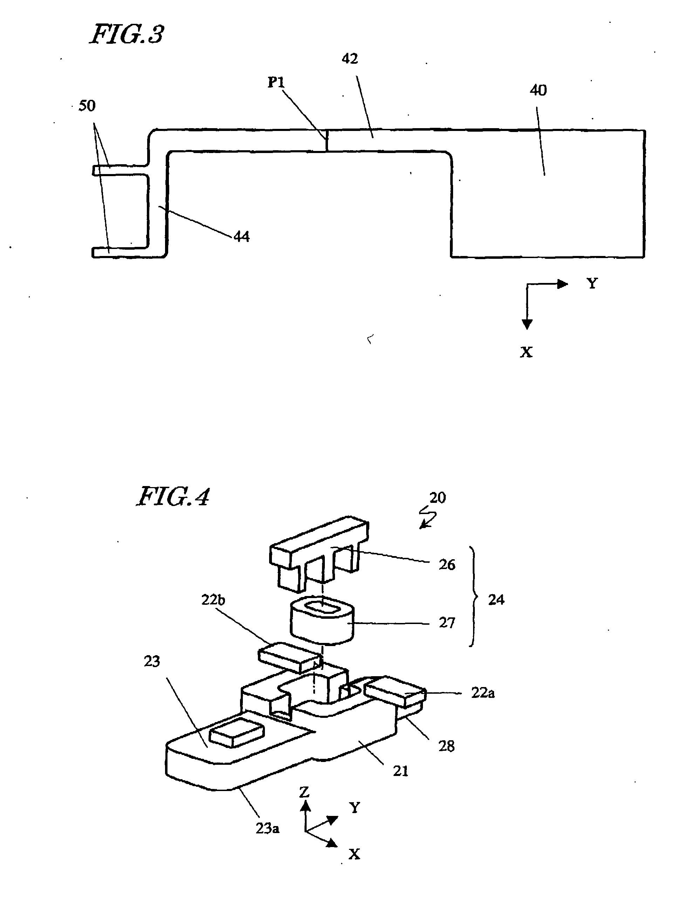

With reference to FIGs. **2** through **4**, an exemplary structure of the magnetic head device **10** according to the first embodiment will be described. As shown in FIG. **2**, the magnetic head device **10** includes the head main body **20** for applying a magnetic field to the magneto-optical disc **12** (see FIGs. **1A** and **1B**), a connecting member **30**, a first position restriction member **22** provided at the head main body **20** and a second position restriction member **50**. The connecting member **30** includes a main part **34** and an elastic part **32**. The elastic part **32** supports the head main body **20** such that the head main body **20** is swingable. The head main body **20** is attached to the elastic part **32**, which is highly elastic, and is swingable with respect to the elastic part **32** with the limitation of being supported by the elastic part **32**. The structure of the head main body **20** will be described in more detail later with reference to FIG. **4**. The head main body **20** includes a slidable body **23** which is slidable in contact with, or floatable at a very fine distance from, the magneto-optical disc **12**. In this embodiment, the slidable body **23** is slidable in contact with the magneto-optical disc **12**.

The connecting member **30** extends in the Y directions, and has a fixed end **30a** and a free end **30b**. The main part **34** and the elastic part **32** of the connecting member **30** are connected to each other. The main part **34** is provided on the side of the fixed end **30a**, and the elastic part **32** is provided on the side of the free end **30b**. The main part **34** includes a rigid part **36**, an elastic part **38**, the fixing plate **40**, and an arm member **42**.

The fixing plate **40** is formed of a metal material, and fixes the magnetic head **18**. The magnetic head **18** includes the head main body **20** and the supporting member **37** for pressing the head main body **20** to the surface of the magneto-optical disc **12**. The supporting member **37** is formed of a thin spring plate formed of, for example, stainless steel or phosphorus bronze. The head main body **20** is attached to one end of the supporting member **37** by means of, for example, bonding or fusion. The other end of the supporting member **37** is fixed to the fixing plate **40** by means of, for example, electric welding or laser welding.

The elastic part **38** provided adjacent to the fixing plate **40,** the rigid part **36** connected to the elastic part **38,** and the elastic part **32** connected to the rigid part **36** are formed of the supporting member **37.** The supporting member **37** is bent in the elastic part **32.** In the following description, the elastic part **38** will be referred to as a "first elastic part **38**", and the elastic part **32** will be referred to as a "second elastic part **32".** The rigid part **36** is bent to have side walls, and acts as a rigid body for the first elastic part **38** and the second elastic part **32.** The second elastic part **32** is branched into two portions, and the two branched portions are connected to each other at tips thereof. A gimbal **32a** is provided at the connected tip of the second elastic part **32.** The second elastic part **32** has an opening **32b.** The head main body **20** is attached to the gimbal **32a** and is located in the opening **32b** of the second elastic part **32.** The head main body **20** is supported by the second elastic part **32** by means of, for example, bonding or fusion so as to be swingable. The first elastic part **38** acts to allow the head main body **20** to follow the vibration of the surface of the magneto-optical disc **12,** and the second elastic part **32** acts to allow the head main body 20 to follow the tilt of the magneto-optical disc **12.**

As shown in FIG. **3,** the arm member **42** extending in the -Y direction is connected to the fixing plate **40** to be in the same plane therewith. The position restriction member **44** extending in the +X direction is connected to one end of the arm member **42,** which is the tip in the -Y direction. The position restriction member **44** is connected to the second position restriction member **50** extending in the -Y direction. In this manner, the second position restriction member **50** is connected to the arm member **42** via the position restriction member **44.**

Referring back to FIG. **2,** the arm member **42** is bent along line **P1** such that the second position restriction member **50** connected to the arm member **42** is positioned farther in the -Z direction than the second elastic part **32.** The second position restriction member **50** is located so as to face the first position restriction member **22** with the second elastic part **32** interposed therebetween. The position restriction member **44** restricts the position of the rigid part **36** in the -Z direction. Hereinafter, the position restriction member **44** will be referred to as a "third position restriction member **44".**

As shown in FIG. **4,** the head main body **20** includes a mounting member **21,** the slidable body **23** attached to the mounting member **21,** and a magnetic head element **24** accommodated in the mounting member **21.** The magnetic head element **24** applies a magnetic field. The upper position restriction member **22** includes two upper position restriction portions (i.e., upper position restriction portions **22a** and **22b).** The upper position restriction portion **22a** extends from the mounting member **21** in +X direction, and the upper position restriction portion **22b** extends from the mounting member **21** in the -X direction. The upper position restriction member **22** is Integrally molded with the mounting member **21** of a resin material. The slidable body **23** is integrally attached to the mounting member **21** by, for example, an adhesive, or is integrally molded with the mounting member **21** of a resin material. The slidable body **23** is formed of a resin material having a high slidability, for example, polyphenylene sulfide or a liquid crystal polymer. The slidable body **23** has a slidable portion **23a** which is slidable in contact with the magneto-optical disc **12.** The slidable portion **23a** is provided such that the slidable body **23** can stably contact the magneto-optical disc **12.** The lower position restriction member **28,** which extends in the +Y direction, is attached to the mounting member **21.** Hereinafter, the lower position restriction member **28** will be referred to as a "fourth position restriction member **28".**

The magnetic head element **24** includes a magnetic core **26** and a coil **27.** As shown in FIG. **4,** the magnetic core **26** has generally E-shaped, and is formed of a soft magnetic material such as, for example, sintered ferrite. The coil **27** is formed by winding a conductive line. The magnetic core **26** is attached to the coil **27** such that the coil **27** surrounds the central magnetic pole of the magnetic core **26** having the generally E shape. Both of two ends of the coil **27** are fixed to an FPC (not shown) by soldering. The coil **27** is electrically connected to the FPC by the solder, and the electric current from the FPC flows through the coil **27.** The electric current is modulated in accordance with the signal to be recorded. By the modulated electric current flowing through the coil **27,** a modulated magnetic field is applied to the magneto-optical disc **12** from the central magnetic pole of the magnetic core **26.**

Referring back to FIG. **2** again, the first position restriction member **22** is provided at the head main body **20** so as to contact the second elastic part **32** when the head main body **20** moves in the -Z direction. The second position restriction member **50** is connected to the third position restriction member **44** so as to restrict the position of the first position restriction member **22** provided at the head main body **20** when the head main body **20** moves in the -Z direction.

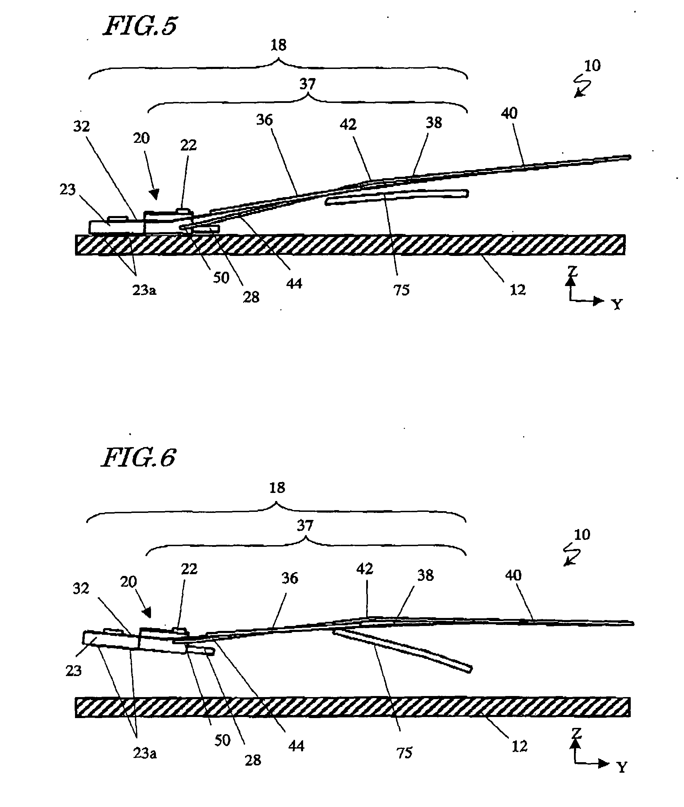

Hereinafter, with reference to FIGs. **5** and **6,** operations of the magnetic head device **10** for recording information on the magneto-optical disc **12** and for reproducing information recorded on the magneto-optical disc **12** will be described.

As shown in FIG. **5,** for recording information on the magneto-optical disc **12,** the magnetic head device **10** moves from the second position to the first position. At this point, a lifting mechanism **75** pivots in a direction of separating from the supporting member **37** and approaching the magneto-optical disc **12.** Therefore, the headmain body **20** moves to a position close to the magneto-optical disc **12.** The supporting member **37** supplies the head main body **20** with a force in a direction of pressing the head main body **20** to the magneto-optical disc **12.** Thus, the head main body **20** can be slide in contact with the rotating magneto-optical disc **12.**

As shown in FIG. 6. for reproducing information recorded on the magneto-optical disc 12, the magnetic head device 10 moves from the first position to the second position. At this point, the lifting mechanism 75 pivots in a direction of separating from the magneto-optical disc 12, and contacts the supporting member 37 and the arm member 42 to lift the supporting member 37 and the arm member 42. Therefore, the head main body 20 is separated from the magneto-optical disc 12. At this point, the third position restriction member 44 is in contact with the rigid part 36. In FIGs. 5 and 6, the cartridge 14 (see FIGs. 1A and 1B) for accommodating the magneto-optical disc 12 is omitted.

A cartridge for accommodating a magneto-optical disc specifically produced only for reproduction does not have the opening 16 (FIG. 1B). Therefore, the magnetic head device 10 is structured such that when the magnetic head device 10 is at the second position, the head main body 20 is separated from the magneto-optical disc 12 to a position where the head main body 20 does not contact the cartridge 14.

Now, the operation of the magnetic head device 10 when receiving a strong impact will be described.

When the magnetic head device 10 receives a strong impact in the -Z direction, the rigid part 36 approaches and contacts the third position restriction member 44. Thus, the position of the rigid part 36 is restricted. In this manner, the first elastic part 38 is prevented from being plastically deformed by the third position restriction member **44**.

When the magnetic head device **10** receives an impact in the -Z direction, the first position restriction member **22** provided at the head main body **20** approaches and contacts the second elastic part **32** and thus restricts the position of the head main body **20**. Even when the first position restriction member **22** contacts and thus elastically deforms the second elastic part **32** and as a result, the first position restriction member **22** and the second elastic part **32** move in the -Z direction, the second elastic part **32** is prevented from being plastically deformed. The reason is that the second position restriction member **50** restricts the position of the first position restriction member **22** and so restricts the position of the head main body **20** providing with the first position restriction member **22**. The second position restriction member **50** restricts the position of the first position restriction member **22** by contacting the second elastic part **32**, which is in contact with the first position restriction member **22**.

When the magnetic head device **10** receives an impact in the +z direction, the fourth (or lower) position restriction member **28** provided at the head main body **20** approaches and contacts the rigidpart **36**. The fourth position restriction member **28** restricts the position of the head main body **20** by contacting the rigid part **36**, and thus prevents the second elastic part **32** for supporting the head main body **20** from being plastically deformed.

The external housing (not shown) of the magneto-optical disc apparatus **100** is located so as to face the magneto-optical disc **12** with the magnetic head device **10** interposed therebetween. Owing to such an arrangement, when the magnetic head device **10** at the second position receives an impact in the +Z direction, the magnetic head device **10** moves in the +Z direction and contacts the external housing, and thus restricts the position of the head main body **20**.

As described above, the second position restriction member **50** is connected to the arm member **42** via the third position restriction member **44**, and the second position restriction member **50** pivots in the Z directions together with the fixing plate **40** connected to the arm member **42**. As shown in FIG. **5**, when the magnetic head device **10** is at the first position, the second position restriction member **50** does not contact the second elastic part **32**. Therefore, the head main body **20** can follow the magneto-optical disc **12** in a satisfactory manner by the second elastic part **32**. This realizes high speed rotation of the magneto-optical disc **12** and thus high speed information recording.

The fixing plate **40** is formed of a metal material, and the second position restriction member **50** is connected to the fixing plate **40** via the third position restriction member **44** and the arm member **42**. Accordingly, when the second position restriction member **50** contacts the second elastic part **32** which is in contact with the first position restriction member **22**, the second position restriction member **50** can, with certainty, give a force to the head main body **20** providing with the first position restriction member **22** via the second elastic part **32.** Thus, the second elastic part **32** for supporting the head main body **20** can be more certainly prevented from being plastically deformed.

As described above, the magnetic head device **10** according to the first embodiment, even when receiving a strong impact by falling or transportation, prevents the second elastic part **32** from being plastically deformed as follows. When the magnetic head device **10** receives a strong impact by falling or transportation and as a result, the head main body **20** receives a strong impact in the -Z direction, the first position restriction member **22** provided at the head main body **20** contacts the second elastic part **32** and thus restricts the position of the head main body **20,** and in addition, the second position restriction member **50** restricts the position of the first position restriction member **22,** which is in contact with the second elastic part **32.** Thus, the second elastic part **32** can be prevented from being plastically deformed by the second position restriction member **50.**

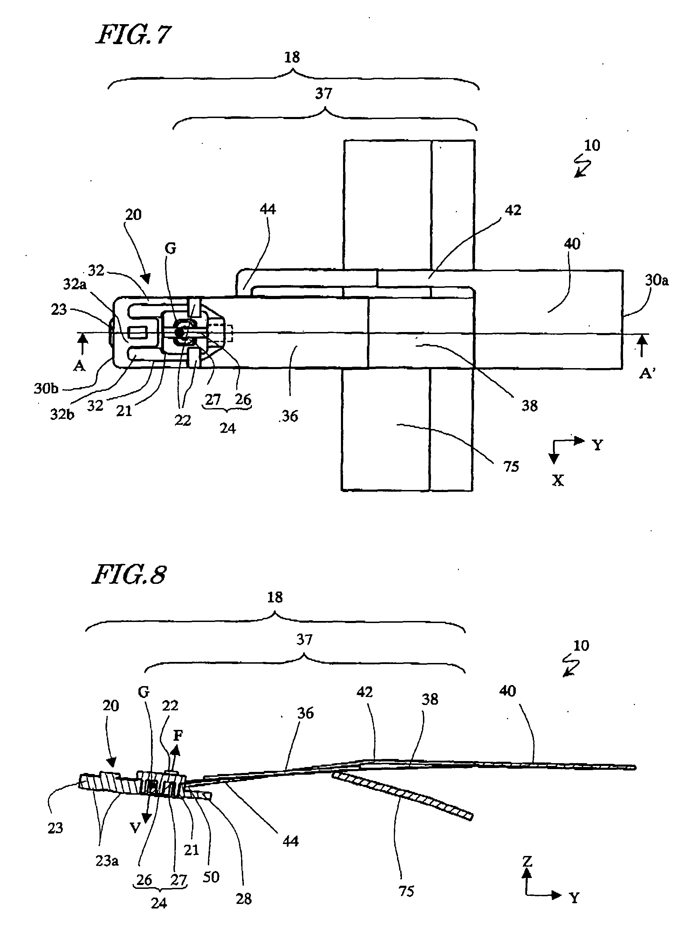

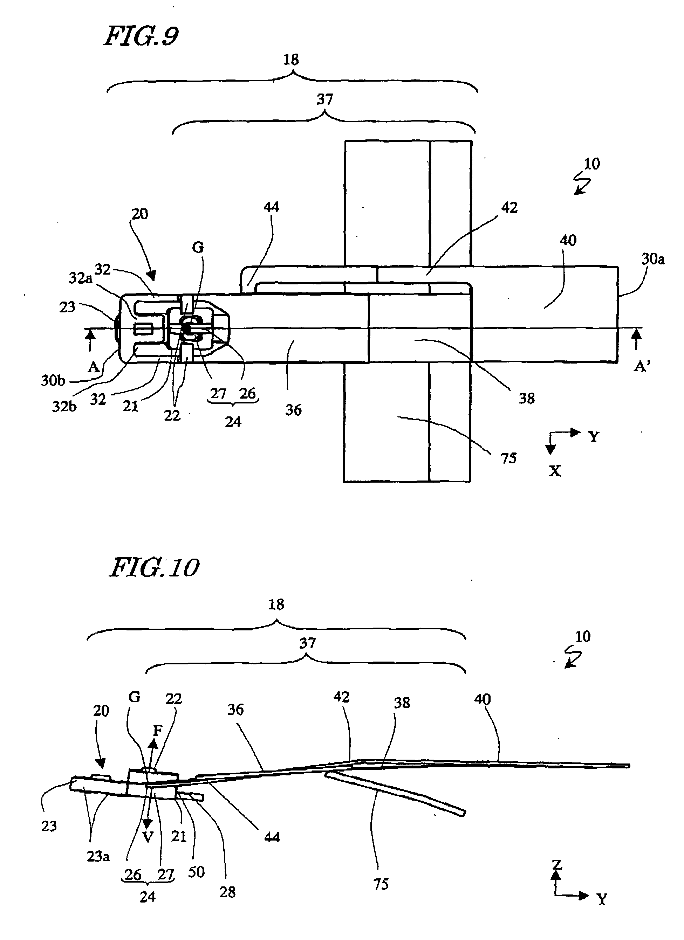

Preferably, as shown in FIGs. **7** and **8,** the first position restriction member **22** is located at an area of the head main body **20** which is other than the area of the head main body **20** closest to the fixed end **30a** of the connecting member **30.** In other words, the first position restriction member **22** is attached to the mounting member **21** of the head main body **20** at an area other than the area indicated by the dashed line in FIG. **7** (the area encompassing the end of the mounting member **21** in the +Y direction). In this case, the first position restriction member **22** is provided in the vicinity of the center of gravity **G** of the head main body **20.** When the first position restriction member **22** contacts the second elastic part **32**, the headmain body **20** receives a force, at the first position restriction member **22**, in the opposite direction to the moving direction of the head main body **20.** If the first position restriction member **22** is located at the area of the head main body **20** which is closest to the fixed end **30a** of the connecting member **30** (the area indicated with the dashed line in FIG. **7),** the first position restriction member **22,** which is provided at the head main body **20** for receiving the force, is far from the center of gravity **G** of the head main body **20.** When the first position restriction member **22** contacts the second elastic part **32** in this state, the force received by the head main body **20** does not much contribute to suppressing the motion of the center of gravity **G** of the head main body **20.** As a result, the head main body **20** significantly vibrates. Referring to FIG. **8,** when the first position restriction member **22,** which is provided at the head main body **20** for receiving the force, is located in the vicinity of the center of gravity **G** of the head main body **20,** a majority of force **F** received by the first position restriction member **22** contributes to suppressing motion **V** of the head main body **20.** Therefore, even when the first position restriction member **22** contacts the second elastic part **32,** the head main body **20** does not significantly vibrate. More specifically, it is preferable that the first position restriction member **22** is located in the vicinity of the magnetic head element **24**. The reason is that the magnetic core **26** and the coil **27** included in the magnetic head element **24** are formed of a metal material and thus have a high specific gravity, and the center of gravity **G** of the head main body **20** exists inside or in the vicinity of the magnetic head element **24**. As described above, it is preferable to locate the first position restriction member **22** at an area of the head main body **20** which is other than the area closest to the fixed end **30a** of the connecting member **30.** For example, as shown in FIG. **8,** it is preferable to locate the first position restriction member **22** at a side part of the head main body **20** in a substantially parallel direction to the Y directions.

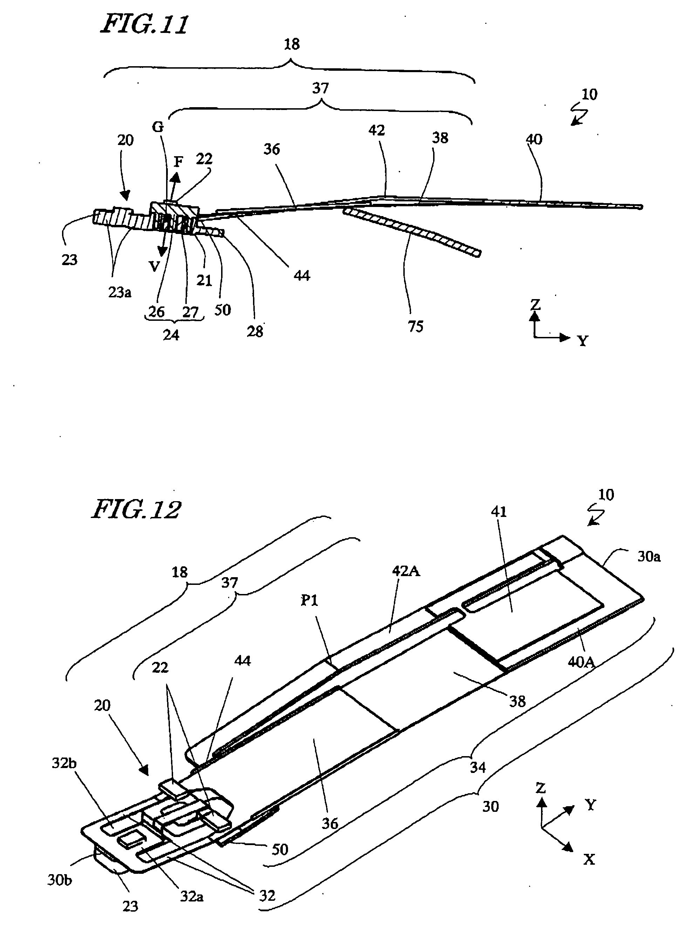

More preferably, as shown in FIGs. **9** through **11,** the first position restriction member **22** is provided at the head main body **20** such that when the first position restriction member **22** contacts the second elastic part **32,** a force in the opposite direction to the moving direction of the center of gravity **G** of the head main body **20** is given to the center of gravity **G.** Referring to FIGs. **10** and **11,** when the first position restriction member **22,** which receives the force applied to the head main body **20,** is located on the locus of the center of gravity **G** of the head main body **20,** the entirety of force **F** received by the first position restriction member **22** contributes to suppressing motion **V** of the head main body **20.** In an ideal case, the head main body **20** does not vibrate. Therefore, it is preferable to locate the first position restriction member **22** at the head main body **20** such that a force in the opposite direction to the moving direction of the center of gravity **G** of the head main body **20** is given to the center of gravity **G.**

As described above, by providing the first position restriction member **22** so as to be in the vicinity of the center of gravity **G** of the head main body **20,** the head main body **20** is prevented from vibrating when the first position restriction member **22** contacts the second elastic part **32.** Thus, the reliability of the magnetic head device **10** against the impact can be improved.

In the above embodiment, the supporting member **37** includes two elastic parts (i.e. , the first elastic part **38** and the second elastic part **32).** The present invention is not limited to such a structure. The supporting member **37** does not need to include the first elastic part **38.**

As described above, in the magnetic head device **10** according to the first embodiment, when the head main body **20** receives an impact in the -Z direction, the second position restriction member **50** restricts the position of the head main body **20** by restricting the position of the first position restriction member **22** which is in contact with the second elastic part **32.** Therefore, the second elastic part **32** is prevented from being plastically deformed. Thus, the reliability of the magnetic head device **10** against the impact can be improved.

When the magnetic head device **10** is at the first position, the second position restriction member **50** does not restrict the position of the head main body **20.** Therefore, the head main body **20** can follow the magneto-optical disc **12** in a satisfactory manner. As a result, high speed rotation of the magneto-optical disc **12,** and thus high speed information recording, are realized.

In the above embodiment, the arm member **42** is connected to the fixing plate **40** to be in the same plane therewith. The present invention is not limited to such a structure.

### (Embodiment 2)

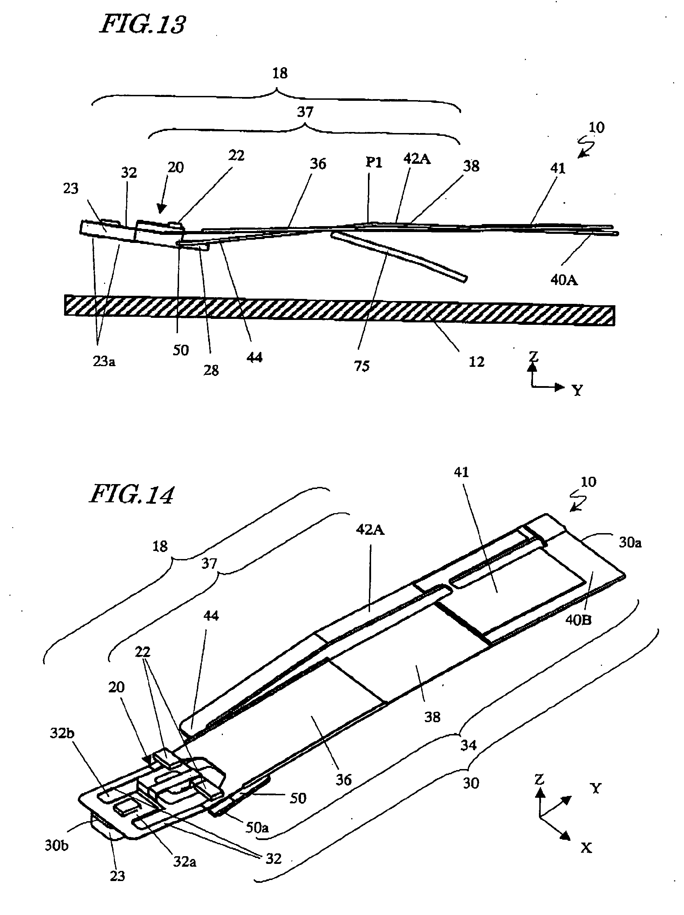

With reference to FIGs. **12** and **13,** a magnetic head device **10** according to a second embodiment of the present invention will be described. In FIGs. **12** and **13**, substantially identical elements with those described above bear identical reference numerals therewith and detailed descriptions thereof will be omitted, In the magnetic head device **10** according to the second embodiment, a pivotable arm member **42A** is freely pivotable with respect to the fixing plate **40A.**

As shown in FIG. **12,** the fixing plate **40A** is formed of a stainless steel plate. The supporting member **37** is fixed to the fixing plate **40A** by means of, for example, bonding or welding.

A leaf spring **41** is formed of a metal plate formed of phosphorus bronze or stainless steel. The leaf spring **41** has a hinge and is fixed to both the fixing plate **40A** and the pivotable arm member **42A** by welding.

The pivotable arm member **42A** extends in the Y directions. The pivotable arm member **42A** is pivotable about the hinge of the leaf spring **41** with respect to the fixing plate **40A.** One of two ends of the pivotable arm member **42A** which is in the -Y direction is pressed toward the magneto-optical disc **12** by the leaf spring **41.** The other end of the pivotable arm member **42A** which is in the +Y direction contacts the fixing plate **40A,** and thus the pivotable arm member **42A** is positioned. The end of the pivotable arm member **42A** in the -Y direction is connected to the third position restriction member **44** extending in the +X direction. The third position restriction member **44** is connected to the second position restriction member **50** extending in the -Y direction. In this manner, the second position restriction member **50** is connected to the pivotable arm member **42A** via the third position restriction member **44.** The pivotable arm member **42A** is bent along line **P1** such that the second position restriction member **50** connected to the pivotable arm member **42A** is positioned farther in the -Z direction than the second elastic part **32.**

Referring to FIG. **13,** when the magnetic head device **10** is at the second position, the lifting mechanism **75** pivots in a direction of separating from the magneto-optical disc **12,** and contacts the supporting member **37** and the pivotable arm member **42A** to lift the supporting member **37** and the pivotable arm member **42A.** Therefore, the head main body **20** is separated from the magneto-optical disc **12.** At this point, the third position restriction member **44** is in contact with the rigid part **36.**

In the magnetic head device **10** according to the second embodiment, the pivotable arm member **42A** is structured to pivot with respect to the fixing plate **40A.** Owing to such a structure, when the magnetic head device **10** moves from the first position to the second position, the pivotable arm member **42A** can pivot about the hinge of the leaf spring **41** or the vicinity thereof, not the shaft **72** (see FIG. **1A).** Therefore, the distance between the magneto-optical disc **12** and line **P1** along which the pivotable arm member **42A** is bent can be shortened.

With the magnetic head device **10** according to the second embodiment, as described in the first embodiment with reference to FIGs. **7** through **11,** the first position restriction member **22** is preferably located at an area of the head main body **20** which is other than the area closest to the fixed end **30a** of the connecting member **30.** More preferably, the first position restriction member **22** is located at the head main body **20** such that when the first position restriction member **22** contacts the second elastic part **32,** a force in the opposite direction to the moving direction of the center of gravity **G** of the head main body **20** is given to the center of gravity **G.**

Owing to the above-described structure, the magnetic head device **10** according to the second embodiment has a reduced thickness.

### (Embodiment 3)

With reference to FIGs. **14** through **16,** a magnetic head device **10** according to a third embodiment of the present invention will be described. In FIGs. **14** through **16,** substantially identical elements with those described above bear identical reference numerals therewith and detailed descriptions thereof will be omitted.

As shown in FIG. **14,** the pivotable arm member **42A** extends in the Y directions, and is formed of a metal material such as, for example, stainless steel or iron. One of two ends of the pivotable arm member **42A** which is in the -Y direction is connected to the third position restriction member **44** extending in the +X direction. The third position restriction member **44** is connected to the second position restriction member **50** extending in the -Y direction.

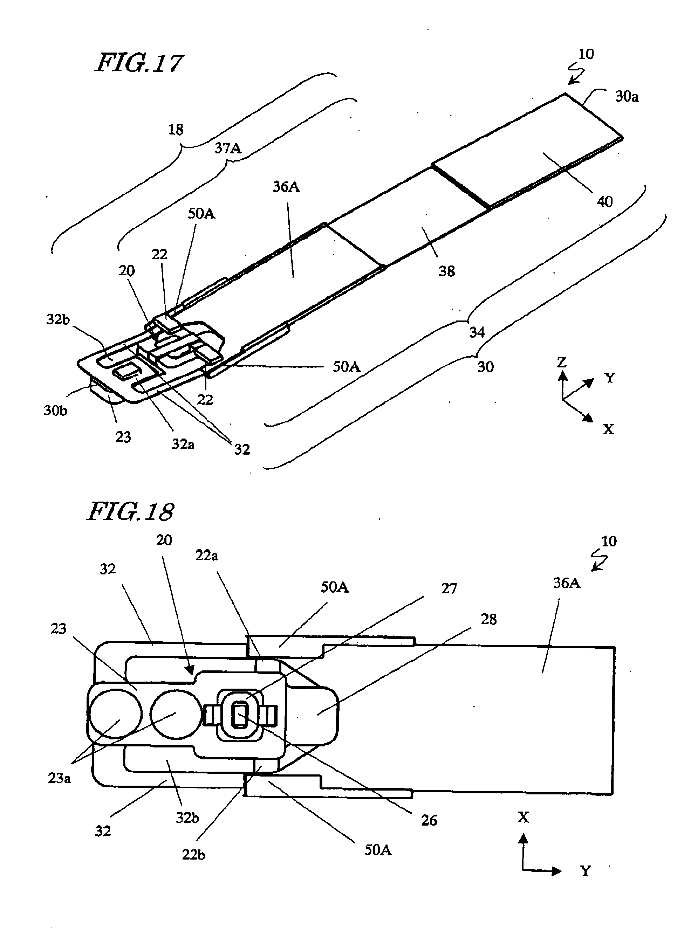

As shown in FIG. **16,** slidable projections **50a** are provided on end surfaces of the second position restriction member **50** which face the magneto-optical disc **12.** The slidable projections **50a** are integrally formed with the second position restriction member **50** by means of, for example, outsert molding. The slidable projections **50a** are formed of a resin material having a high slidability, for example, polyphenylene sulfide or a liquid crystal polymer. Each slidable projection **50a** has the shape of a column having a substantially semicircular cross-section. The surface of each slidable projection **50a** facing the magneto-optical disc **12** is curved.

The magnetic head device **10** according to the third embodiment is different from the magnetic head device **10** according to the second embodiment in that the former includes the slidable projections **50a** formed of a highly slidable resin material on the surfaces of the second position restriction member **50** which face the magneto-optical disc **12.**

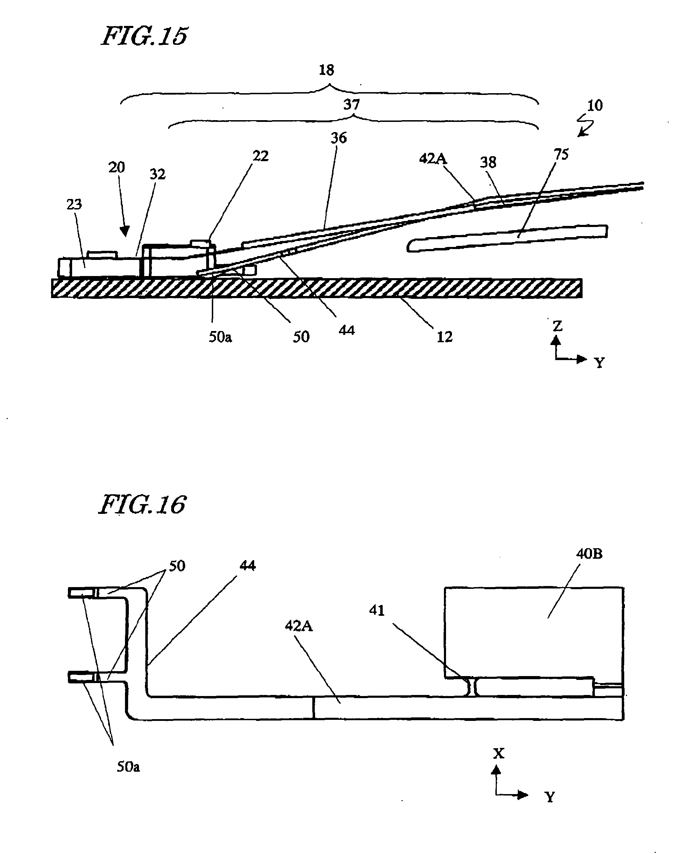

Referring to FIG. **15,** when the magnetic head device **10** is at the first position, the lifting mechanism **75** pivots in a direction of separating from the pivotable arm member **42A** and the supporting member **37** and approaching the magneto-optical disc **12.** At this point, the head main body **20** moves toward, and contacts, the magneto-optical disc **12.** Since the supporting member **37** supplies the head main body **20** in a direction of pressing the head main body **20** to the magneto-optical disc **12,** the head main body **20** can slide in contact with the rotating magneto-optical disc **12.**

The pivotable arm member **42A** is supplied by the leaf spring **41** with a force in a direction of being pressed to the magneto-optical disc **12.** Therefore, the slidable projections **50a** provided on the ends of the second position restriction member **50** slide in contact with the rotating magneto-optical disc **12.**

When the magneto-optical disc **12** vibrates in the state where the magnetic head device **10** is at the first position and the magneto-optical disc **12** is rotating, the first position restriction member **22** provided at the head main body **20** and the second elastic part **32** for supporting the first position restriction member **22** swing in the Z directions. In the magnetic head device **10** according to the third embodiment, the slidable projections **50a** provided on the second position restriction member **50** slide in contact with the magneto-optical disc **12.** Therefore, the second position restriction member **50** swing in the Z directions, like the first position restriction member **22** and the second elastic part **32.** Therefore, in the magnetic head device **10** according to the third embodiment, the distance between the second position restriction member **50** and the second elastic part **32** does not change or changes by a very small amount. Therefore, the second elastic part **32** is prevented from contacting the second position restriction member **50** while the magnetic head device **10** is recording information. This realizes high speed rotation of the magneto-optical disc **12** and thus high speed recording information. In addition, the second position restriction member **50** can be located in the vicinity of the second elastic part **32** and thus the magnetic head device **10** can be reduced in thickness.

In the above embodiment, the pivotable arm member **42A** is formed of a metal material. Alternatively, the pivotable arm member **42A** may be formed of the same resin as that of the slidable projections **50a** or may be integrally formed with the slidable projections **50a**

With the magnetic head device **10** according to the third embodiment, as described in the first embodiment with reference to FIGs. **7** through **11,** the first position restriction member **22** is preferably located at an area of the head main body **20** which is other than the area closest to the fixed end **30a** of the connecting member **30.** More preferably, the first position restriction member **22** is located at the head main body **20** such that when the first position restriction member **22** contacts the second elastic part **32,** a force in the opposite direction to the moving direction of the center of gravity **G** of the head main body **20** is given to the center of gravity **G**.

As described above, in the magnetic head device **10** according to the third embodiment, the second elastic part **32** is prevented from contacting the second position restriction member **50** while the magnetic head device **10** is recording information. Therefore, high speed rotation of the magneto-optical disc **12,** and thus high speed recording information, are realized. In addition, the magnetic head device **10** can be reduced in thickness.

### (Embodiment 4)

With reference to FIGs. **17** through **19,** a magnetic head device **10** according to a fourth embodiment of the present invention will be described. In FIGS. **17** through **19**, substantially identical elements with those described above bear identical reference numerals therewith and detailed descriptions thereof will be omitted.

The magnetic head device **10** according to the fourth embodiment is different from the magnetic head device **10** according to the previous embodiments in that the former has a second position restriction member **50A** provided at a rigid part **36A.**

As shown in FIG. **17,** the second position restriction member **50A** is formed by bending side walls of the rigid part **36A.** The second position restriction member **50A** faces the first position restriction member **22** with the second elastic part **32** interposed therebetween. The supporting member **37** is formed of a thin spring plate formed of, for example, stainless steel or phosphorus bronze. The first elastic part **38** provided adjacent to the fixing plate **40,** the rigid part **36A** connected to the first elastic part **38,** and the second elastic part **32** connected to the rigid part **36A** are formed of the supporting member **37.** The second position restriction member **50A** is formed by bending side walls of the rigid part **36A,** integrally with the rigid part **36A.** The second position restriction member **50A** and the second elastic part **32** are away from each other by a predetermined distance.

As shown in FIG. **18,** the second elastic part **32** is branched into two portions, and the two branched portions are connected to each other at tips thereof. The second elastic part **32** has an opening **32b.** The head main body **20** is located in the opening **32b** of the second elastic part **32,** and the head main body **20** is supported by the elastic part **32** by means of, for example, bonding or fusion, so as to be swingable. The slidable body **23** of the head main body **20** has a slidable portion **23a.**

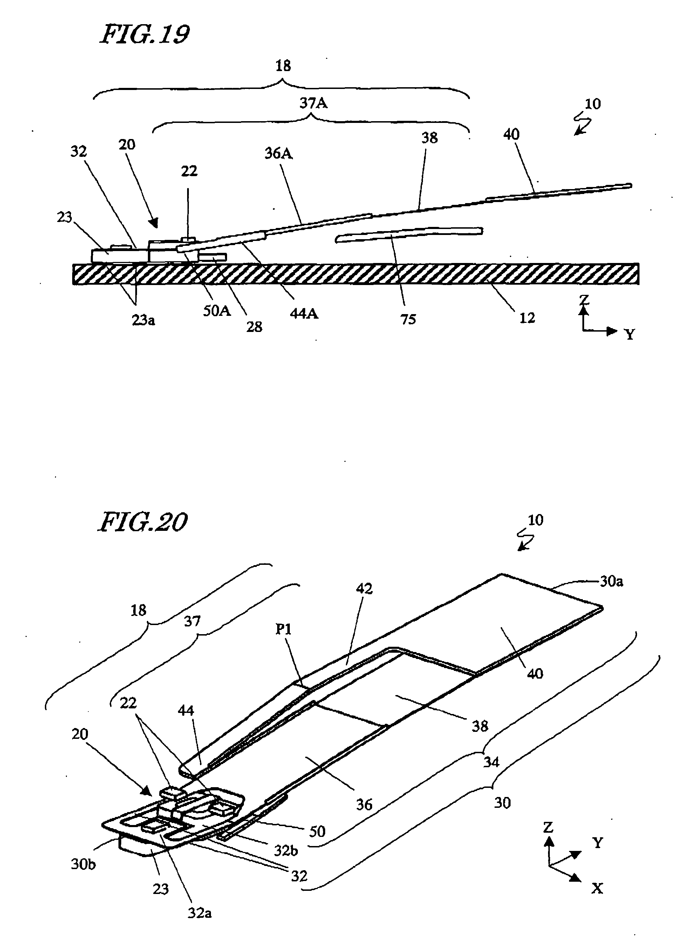

As shown in FIG. **19,** when the magnetic head device **10** is at the first position, the surface of the magneto-optical disc **12** vibrates by the rotation of the magneto-optical disc **12.** In the magnetic head device **10** according to the fourth embodiment, the second position restriction member **50A** is integrally formed with the supporting member **37.** Therefore, when the first position restriction member **22** provided at the head main body **20** and the second elastic part **32** for supporting the head main body **20** swing in the Z directions by the vibration of the magneto-optical disc **12,** the second position restriction member **50A** swings in the Z directions, like the second elastic part **32** and the first position restriction member **22.** In this manner, the second elastic part **32** is prevented from contacting the second position restriction member **50A** while the magnetic head device **10** is at the first position. As a result, high speed rotation of the magneto-optical disc **12**, and thus high speed information recording, are realized. In addition, the second position restriction member **50A** can be located in the vicinity of the second elastic part **32,** which reduces the thickness of the magnetic head device **10**.

The rigid part **36A** is formed by bending the supporting member **37** so as to act as a rigid body for the first elastic part **38** and the second elastic part **32**. The second position restriction member **50A** is connected to the rigid part **36A**. Accordingly, when the second position restriction member **50A** contacts the second elastic part **32** which is in contact with the first position restriction member **22**, the second position restriction member **50A** can, with certainty, give a force to the head main body **20** providing with the first position restriction member **22** via the second elastic part **32**. Thus, the second elastic part **32** for supporting the head main body **20** can be more certainly prevented from being plastically deformed.

In the above embodiment, the second position restriction member **50A** is formed by bending a part of the supporting member **37**. Alternatively, the second position restriction member **50A** may be integrally formed with the supporting member **37** of a resin material by means of, for example, outsert molding.

With the magnetic head device **10** according to the fourth embodiment, as described in the first embodiment with reference to FIGs. **7** through **11**, the first position restriction member **22** is preferably located at an area of the head main body **20** which is other than the area closest to the fixed end **30a** of the connecting member **30**. More preferably, the first position restriction member **22** is located at the head main body **20** such that when the first position restriction member **22** contacts the second elastic part **32,** a force in the opposite direction to the moving direction of the center of gravity **G** of the head main body **20** is given to the center of gravity **G.**

As described above, in the magnetic head device **10** according to the fourth embodiment, the change in the distance between the second position restriction member **50A** and the second elastic part **32,** which is caused by the vibration of the magneto-optical disc **12,** can be reduced. Therefore, the magnetic head device **10** can have a reduced thickness. In addition, since the second position restriction member **50A** is integrally formed with the rigid part **36A,** the reliability of the magnetic head device **10** against the impact can be improved without requiring an arm member. This reduces the cost of the magneto-optical disc apparatus.

In the above embodiments, the second position restriction member **50** or **50A** restricts the position of the first position restriction member **22** by contacting the second elastic part **32.** The present invention is not limited to such a structure. The second position restriction member **50** or **50A** may restrict the position of the first position restriction member **22** by contacting at least one of the first position restriction member **22** and the second elastic part **32.**

In the first through fourth embodiments, the second elastic part **32,** which is in contact with the first position restriction member **22,** contacts the second position restriction member **50** or **50A,** and thus the position of the first position restriction member **22** and therefore the position of the head main body **20** providing with the first position restriction member **22** are restricted. In this manner, the second elastic part **32** for supporting the head main body **20** can be prevented from being plastically deformed,

### (Embodiment 5)

With reference to FIGs. **20** through **23,** a magnetic head device **10** according to a fifth embodiment of the present invention will be described. In FIGs. **20** through **23**, substantially identical elements with those described above in the first through fourth embodiments bear identical reference numerals therewith and detailed descriptions thereof will be omitted.

The magnetic head device **10** according to the fifth embodiment is different from the magnetic head device **10** according to the first through fourth embodiments in that in the former, the first position restriction member **22** contacts the second position restriction member **50** without contacting the second elastic part **32.**

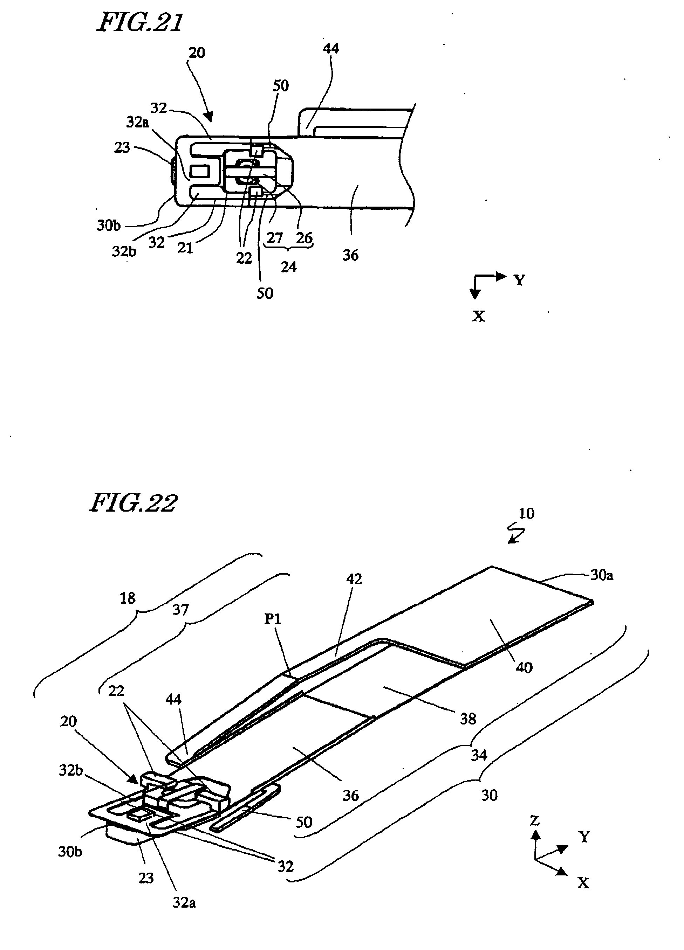

As shown in FIGs. **20** and **21,** the magnetic head device **10** according to the fifth embodiment is different from the magnetic head device **10** according to the first embodiment described above with reference to FIG. **2** in that in the former, the first position restriction member **22** provided at the head main body **20** is short.

The first position restriction member **22** of the head main body **20** faces the second position restriction member **50,** and the first position restriction member **22** is short. Therefore, when the head main body **20** moves in the -Z direction, the first position restriction member **22** passes through the opening **32b** of the second elastic part **32** without contacting the second elastic part **32** and contacts the second position restriction member **50.**

In the fifth embodiment as in the first embodiment, the fixing plate **40** is formed of a metal material, and the second position restriction member **50** is connected to the fixing plate **40** via the third position restriction member **44** and the arm member **42.** Accordingly, when the second position restriction member **50** contacts the first position restriction member **22,** the second position restriction member **50** can, with certainty, give a force to the head main body **20** providing with the first position restriction member **22.** Thus, the second elastic part **32** for supporting the head main body **20** can be prevented from being plastically deformed.

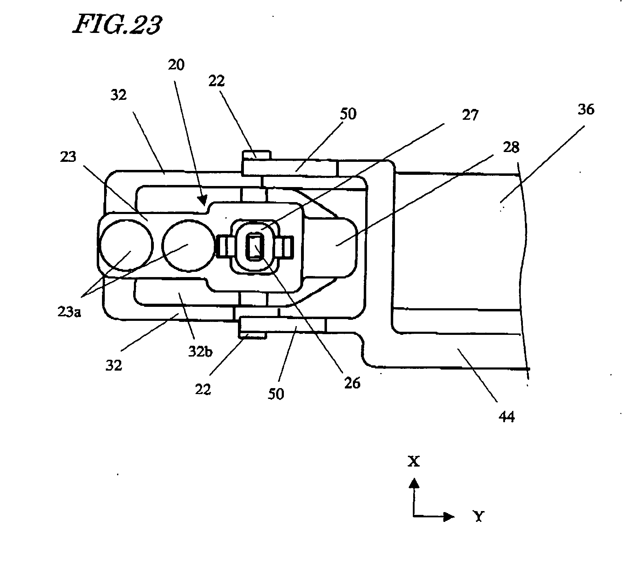

in the above embodiment, the first position restriction member **22** provided at the head main body **20** passes through the opening **32b** of the second elastic part **33** to contact the second position restriction member **50,** but the present invention is not limited to such a structure. FIGs. **22** and **23** show a magnetic head device **10** in a modification of the fifth embodiment of the present invention.

As shown in FIGs. **22** and **23**, the magnetic head device **10** in the modification is different from the magnetic head device **10** described above with reference to FIGs. **20** and **21** in that in the former, a part of the first position restriction member **22** passes outside the second elastic part **32** to contact the second position restriction member **50.**

In this modification of the fifth embodiment, the head main body **20** is located in the opening **32b** of the second elastic part **32,** with the first position restriction member **22** provided at the head main body **20** being provided so as to bridge over the second elastic part **32.** In more detail, the first position restriction member **22** is L-shaped, and includes a first portion extending in the X direction so as to bridge over the second elastic part **32** and second portions extending in the -Z direction from tips of the first portion. The second position restriction member **50** is provided so as to face the second portions of the first position restriction member **22.** When the head main body **20** moves in the - Z direction, the second portions of the first position restriction member **22** pass outside the second elastic part **32** and contact the second position restriction member **50.**

In this modification also, the fixing plate **40** is formed of a metal material, and the second position restriction member **50** is connected to the fixing plate **40** via the third position restriction member **44** and the arm member **42.** Accordingly, when the second position restriction member **50** contacts the first position restriction member **22,** the second position restriction member **50** can, with certainty, give a force to the head main body **20** providing with the first position restriction member **22.** Thus, the second elastic part **32** for supporting the head main body **20** can be prevented from being plastically deformed.

When the second portions of the first position restriction member **22** contact the second position restriction member **50,** the first portion of the first position restriction member **22** may or may not contact the second elastic part **32.** In either case, the second elastic part **32** for supporting the head main body **20** can be prevented from being plastically deformed.

With the magnetic head device **10** according to the fifth embodiment and the above-described modification, as described in the first embodiment with reference to FIGs, **7** through **11,** the first position restriction member **22** is preferably located at an area of the head main body **20** which is other than the area closest to the fixed end **30a** of the connecting member **30.** More preferably, the first position restriction member **22** is located at the head main body **20** such that when the first position restriction member **22** contacts the second elastic part **32,** a force in the opposite direction to the moving direction of the center of gravity **G** of the head main body **20** is given to the center of gravity **G.** In the fifth embodiment and the modification thereof, the first position restriction member **22** contacts the second position restriction member **50** without contacting the second elastic part **32.** With such a structure, substantially the same effects as those described in the first embodiment with reference to FIGs - **7** through **11** are provided.

Like in the first through fourth embodiments, when the magnetic head device **10** is at the first position, the secondposition restriction member **50** does not restrict the position of the head main body **20.** Therefore, the head main body **20** can follow the magneto-optical disc **12** in a satisfactory manner. This realizes high speed rotation of the magneto-optical disc **12** and thus high speed information recording.

The second position restriction member **50** is connected to the fixing plate **40** in the fifth embodiment and the modification thereof. Alternatively, as in the fourth embodiment described with reference to FIGs. **17** through **19,** the second position restriction member **50A** formed by bending the rigid part **36A** may be used. In this case also, the position of the head main body **20** is restricted by the second position restriction member **50A** connected to the rigid part **36A,** and therefore the second elastic part **32** for supporting the head main body **20** can be prevented from being plastically deformed.

In the above embodiments, the second position restriction member **50** or **50A** is connected to the fixing plate **40** or the rigid part **36A.** As long as the second position restriction member **50** or **50A** is connected to a higher rigidity part of the main part **34** having a higher rigidity than that of the second elastic part **32,** the second elastic part **32** for supporting the head main body **20** can be prevented from being plastically deformed.

In the above embodiments, the fixing plate **40** or **40A** is formed of a metal material, but the present Invention is not limited to this. The fixing plate **40** or **40A** may be formed by molding a resin such as, for example, polyphenylene sulfide, a liquid crystal polymer, or polycarbonate. In that case, it is preferable to add a reinforcing additive such as, for example, glass fiber or carbon fiber to the resin.

In the above embodiments, the head main body **20** includes two first position restriction portions (i.e., the first position restriction portions **22a** and **22b).** The present invention is not limited to such a structure. The two first position restriction portions may be integrated together.

In the above embodiments, the magnetic head device **10** provides with a head main body **20** which is slidable in contact with the magneto-optical disc **12** as an information recording medium. The present invention is not limited to such a structure. A magnetic head device according to the present invention may include a head main body which floats at substantially a constant distance from the magneto-optical disc by the rotation of the magneto-optical disc.

In the above embodiments, a magneto-optical disc is used as an exemplary information recording medium. The present invention is not limited to this. An information recording medium may be, for example, a magnetic disc used as a flexible disc or a hard disc. A magnetic head device according to the present invention may be used for a magnetic disc apparatus. A magnetic head device according to the present invention is preferably used for a magneto-optical disc apparatus in order to provide the effect of the present invention in the best manner, for the following reason. In the case where a magneto-optical disc is not mounted on a magneto-optical disc apparatus, the magnetic head device apparatus is at the second position. When the magneto-optical disc apparatus receives a strong impact in this state, the elastic part of the magnetic head device of the magneto-optical disc apparatus is significantly deformed, and thus the magnetic head device receives stronger damage. Where the magnetic head device according to the present invention is used, the reliability of the magnetic head device against the impact can be highly improved.

According to the present invention, even when the magneto-optical disc apparatus including the magnetic head device receives a strong impact by falling or transportation, the elastic part of the magnetic head device is prevented from being plastically deformed. In addition, since the second position restriction member does not contact the elastic part during information recording, high speed information recording is realized.

While the present invention has been described with respect to preferred embodiments thereof, it will be apparent to those skilled in the art that the disclosed Invention may be modified in numerous ways and may assume many embodiments other than those specifically described above. Accordingly, it is intended by the appended claims to cover all modifications of the invention that fall within the true spirit and scope of the invention.

## Claims

1. A magnetic head device, comprising:
a head main body for applying a magnetic field to an information recording medium;
a connecting member including a main part and an elastic part connected to the main part, the elastic part supporting the head main body such that the head main body is swingable;
a first position restriction member provided at the head main body for restricting a position of the head main body by contacting the elastic part; and
a second position restriction member for restricting a position of the head main body by restricting a position of the first position restriction member which in contact with the elastic part.

2. A magnetic head device according to claim 1, wherein the second position restriction member is located so as to face the first position restriction member with the elastic part interposed therebetween.

3. A magnetic head device according to claim 1, wherein the second position restriction member restricts the position of the first position restriction member by contacting at least one of the elastic part and the first position restriction member.

4. A magnetic head device according to claim 1, wherein the second position restriction member is provided at the main part.

5. A magnetic head device according to claim 1, wherein the main part includes a rigid part connected to the elastic part and another elastic part connected to the rigid part.

6. A magnetic head device according to claim 5, wherein the elastic part, the rigid part and the another elastic part are formed of a supporting member.

7. A magnetic head device according to claim 6, wherein the main part further includes a fixing part for fixing the supporting member.

8. A magnetic head device according to claim 7, wherein the main part further includes an arm member, and the second position restriction member is attached to the arm member.

9. A magnetic head device according to claim 8, wherein the arm member is connected to the fixing part.

10. A magnetic head device according to claim 9, wherein the arm member is provided so as to be pivotable with respect to the fixing part.

11. A magnetic head device according to claim 8, the second position restriction member has a slidable projection at an end thereof.

12. A magnetic head device according to claim 11, wherein the slidable projection has a curved surface.

13. A magnetic head device according to claim 5, wherein the second position restriction member is provided at the rigid part.

14. A magnetic head device according to claim 5, wherein the first position restriction member is located in the vicinity of the center of gravity of the head main body.

15. A magnetic head device according to claim 1, wherein:
the connecting member has a free end and a fixed end, the elastic part of the connecting member is located on the side of the free end, and the main part is located on the side of the fixed end; and
the first position restriction member is located at an area of the head main body which is other than an area of the head main body closest to the fixed end of the connecting member.

16. A magnetic head device according to claim 1, wherein the first position restriction member is provided at the head main body, such that a force in a direction opposite to a direction in which the center of gravity of the head main body moves is given to the center of gravity of the head main body by the first position restriction member contacting the elastic part.

17. A magnetic head device according to claim 1, wherein the connecting member extends in a first direction, and the first position restriction member is provided so as to be perpendicular to the first direction.

18. A magnetic head device according to claim 1, further comprising a third position restriction member for restricting a position of the main part.

19. A magnetic head device according to claim 18, wherein the second position restriction member is attached to the third position restriction member.

20. A magnetic head device according to claim 1, further comprising a fourth position restriction member provided at the head main body for restricting a position of the head main body by contacting the main part.

21. A magnetic head device according to claim 1, which is movable between a first position, at which the head main body is slidable in contact with the information recording medium or floatable at a fine distance from the information recording medium, and a second position, at which the head main body is separated from the information recording medium.

22. A magnetic head device, comprising:
a head main body for applying a magnetic field to an information recording medium;
a connecting member including a main part and an elastic part connected to the main part, the elastic part supporting the head main body such that the head main body is swingable;
a first position restriction member provided at the head main body: and
a second position restriction member for restricting a position of the head main body by restricting a position of the first position restriction member;
wherein:
the main part includes a high rigidity part having a higher rigidity than the rigidity of the elastic part; and
the second position restriction member is connected to the high rigidity part.

23. A magnetic head device according to claim 22 , wherein the second position restriction member restricts a position of the first position restriction member by contacting the first position restriction member.

24. A magnetic head device according to claim 23, wherein:
the elastic part has an opening; and
the first position restriction member moves in the opening of the elastic part to contact the second position restriction member.

25. A magnetic head device according to claim 23, wherein:
the elastic part has an opening;
the head main body is located in the opening of the elastic part ;
the first position restriction member is provided at the head main body so as to bridge over the elastic part; and
a part of the first position restriction member moves outside the elastic part to contact the second position restriction member.

26. A magnetic head device according to claim 22, wherein:
the main part includes a rigid part connected to the elastic part, another elastic part connected to the rigid part, and a fixing part connected to the another elastic part;
the high rigidity part is the fixing part; and
the second position restriction member is connected to the fixing part.

27. A magnetic head device according to claim 22, wherein:
the main part includes a rigid part connected to the elastic part, and another elastic part connected to the rigid part;
the high rigidity part is the rigid part; and
the second position restriction member is connected to the rigid part.

28. A magneto-optical disc apparatus, comprising:
a magnetic head device according to claim 1; and
an optical head device.

29. A magneto-optical disc apparatus, comprising:
a magnetic head device according to claim 22; and
an optical head device.
